# EUROPÄISCHE PATENTSCHRIFT

(11) **EP 3 288 823 B1**
(45) Veröffentlichungstag und Bekanntmachung des Hinweises auf die Patenterteilung: **02.12.2020**
(21) Anmeldenummer: 16711542.7
(22) Anmeldetag: 09.03.2016
(51) Int. Cl.: B62J 17/02

(54) **VERKLEIDUNGSEINHEIT BESTEHEND AUS MEHREREN VERKLEIDUNGSTEILEN**
TRIM UNIT CONSISTING OF A PLURALITY OF TRIM PARTS
UNITÉ D'HABILLAGE CONSTITUÉE DE PLUSIEURS ÉLÉMENTS D'HABILLAGE

(30) Priorität: 28.04.2015 DE 102015207722
(43) Veröffentlichungstag der Anmeldung: 07.03.2018
(73) Patentinhaber: Bayerische Motoren Werke Aktiengesellschaft, 80809 München (DE)
(72) Erfinder: DRESSLER, Matthias, 80993 München (DE); STRASSER, Dieter, 82386 Oberhausen (DE)
(86) Internationale Anmeldenummer: PCT/EP2016/054957
(87) Internationale Veröffentlichungsnummer: WO 2016/173752

(56) Entgegenhaltungen:
- CN-A- 102 975 797
- JP-A- H0 257 491
- JP-A- S6 092 178
- JP-A- H05 310 164

## Beschreibung

Die Erfindung betrifft eine Motorradscheinwerferverkleidungseinheit bestehend aus mehreren Verkleidungsteilen. Insbesondere betrifft die Erfindung eine Motorradscheinwerferverkleidungseinheit mit einer oberen Sichtseite und einer unteren Rückseite, wobei an einem ersten Verkleidungsteil frei stehende Schenkel mit jeweils freien Enden ausgebildet sind und die Schenkel jeweils zwischen sich eine Aussparung bestimmen. Ein Fahrzeug mit einem Verkleidungsteil gemäß dem technischen Gebiet der Erfindung ist bereits aus der EP 2 979 962 A1 und der CN 102 975 797 A bekannt. Weitere Verkleidungsteile für einspurige Kraftfahrzeuge sind zudem aus den Dokumenten JP H05310164 A, JP H0257491 A und JP S6092178 A bekannt.

Modernes Motorrad- bzw. Motorrollerdesign bedingt häufig sehr filigran wirkende Lackverkleidungsteile mit frei stehenden Schenkeln, d.h. zumindest abschnittsweise ohne geschlossene Kontur. Bedingt durch die Herstellprozesse wie den Kunststoff-Spritzguss und die Lackierung unterliegen derartige Verkleidungsteile jedoch meist einer großen Maßabweichung, insbesondere an den freien stehenden Schenkeln. Dies wiederum bedingt ungleichmäßige Fugenbilder und mithin eine deutliche Reduzierung des Qualitätseindrucks. Im ungünstigsten Fall kann extrem starker Verzug bei der Fertigung eine korrekte Montage der Teile an der Trägerstruktur oder an weiteren Verkleidungsteilen unmöglich machen.

Diese Probleme schränken die Gestaltungsfreiheit im Styling deutlich ein. Zudem muss zum Ausgleich des Bauteilverzuges entsprechend viel Verschiebeweg an den Befestigungspunkten vorgesehen werden, beispielsweise Langlöcher mit den in der Technik bekannten Nachteilen bezüglich der Flächenpressung unter dem Schraubenkopf. Ferner sind zum Ausgleich des Bauteilverzugs vergleichsweise große Fugen notwendig. Dies widerspricht jedoch dem steten Wunsch nach möglichst kleinen Fugen. Schließlich ist auch die Produktion bzw. Lackierung durch empfindlichere Prozessparameter bedingt durch die freien Schenkel deutlich erschwert.

Der Erfindung liegt deshalb die Aufgabe zugrunde, eine Motorradscheinwerferverkleidungseinheit mit frei stehenden Schenkeln bereitzustellen, die eine besonders hohe Maßhaltigkeit gewährleistet. Zudem soll eine Motorradscheinwerferverkleidungseinheit ermöglicht werden, die sich durch besonders geringe Fugenabstände auszeichnet. Diese Aufgaben werden gelöst durch die Merkmalskombination gemäß Patentanspruch 1.

Erfindungsgemäß wird eine Motorradscheinwerferverkleidungseinheit mit einer oberen Sichtseite und einer unteren Rückseite gemäß dem Hauptanspruch vorgeschlagen. Die Motorradscheinwerferverkleidungseinheit weist ein erstes Verkleidungsteil auf, an welchem mindestens zwei frei stehende Schenkel mit jeweils freien Enden ausgebildet sind, wobei die Schenkel jeweils zwischen sich eine Aussparung bestimmen. Die Erfindung ist dabei dadurch gekennzeichnet, dass die freien Enden der Schenkel auf ihrer Rückseite und zur Oberseite der Sichtseite beabstandet mit mindestens einem Verbindungssteg verbunden sind. Der Verbindungssteg schließt die Kontur, so dass die jeweilige Aussparung durch die jeweiligen Schenkel und den Verbindungssteg vollumfänglich umgeben ist. Die durch den Verbindungssteg geschlossene Kontur erhöht die Verkleidungsbauteilsteifigkeit und verhindert einen fertigungsbedingten Bauteil- bzw. Schenkelverzug. Dadurch, dass der Verbindungssteg auf der Rückseite und zur Oberfläche der Sichtseite beabstandet verläuft, können weitere Verkleidungsteile auf den Verbindungssteg aufgelegt werden und einen bündigen Übergang zur Sichtseite des Verkleidungsteil gewährleisten. Der Verbindungssteg ist dann von der Sichtseite des Verkleidungsteils unsichtbar und wird von dem an dem Verkleidungsteil angeordneten weiteren Verkleidungsteil verdeckt.

Das erste Verkleidungsteil ist vorzugsweise aus Kunststoff hergestellt und lackiert. Bezüglich der Lackierung ist die Erfindung vorteilhaft, da der dabei im Verkleidungsteil stets auftretende Verzug minimiert wird.

In einer vorteilhaften Ausführungsvariante ist vorgesehen, dass der Verbindungssteg einteilig an dem ersten Verkleidungsteil angeformt ist. Vorzugsweise wird der Verbindungssteg an die freien Schenkel des ersten Verkleidungsteils im Spritzgussverfahren mit angespritzt.

Ferner ist eine Ausführung günstig, bei der sich der Verbindungssteg parallel zur Rückseite des ersten Verkleidungsteils und entlang einer zur Sichtseite beabstandeten Ebene erstreckt. Der Verbindungssteg wird gegenüber dem ersten Verkleidungsteil dünnwandiger ausgebildet und bildet selbst eine Fläche mit ausreichender Breite zur Erreichung der gewünschten Bauteilsteifigkeit.

Dabei wird in einer Ausführung des ersten Verkleidungsteils vorgesehen, dass der Verbindungssteg zumindest abschnittsweise als Fortsetzung der Erstreckung der Schenkel in Richtung seiner freien Enden ausgebildet ist. Der Verbindungssteg verbindet somit nicht nur die freien Enden der jeweiligen Schenkel, sondern verlängert die Schenkel im nicht sichtbaren Bereich, wodurch neben der Erhöhung der Steifigkeit auch eine Auflage für weitere Bauteile erzeugt wird. Die Auflage beschränkt sich nicht auf den die Schenkel fortsetzenden Abschnitt, sondern wird erfindungsgemäß über die gesamte freie, von den Schenkeln unabhängige Erstreckung des Verbindungsstegs bereit gestellt.

In einem Ausführungsbeispiel ist vorgesehen, dass an dem Verbindungssteg mindestens eine Führungskante ausgebildet ist, entlang der ein zweites Verkleidungsteil positionsfest an das Verkleidungsteil anordenbar ist. Die eine oder mehrere Führungskanten ermöglichen ein Anlegen des zweiten Verkleidungsteil an einer exakten Relativposition gegenüber dem ersten Verkleidungsteil mit dem Verbindungssteg mit möglichst geringem Fugenabstand zwischen den Bauteilen.

Zudem wird durch die Führungskanten die Ausrichtung der Bauteile zueinander sowie die Montage erleichtert.

Ferner ist erfindungsgemäß vorgesehen, dass an dem Verbindungssteg Befestigungsmittel zur Befestigung von Verkleidungsteilen oder Motorradteilen vorgesehen sind. Als Befestigungsmittel kommen Schrauben, Verrastungen, Verklipsungen, Aufnahmelöcher oder dergleichen in Betracht. Auch diese sind günstigerweise im montierten Zustand nicht sichtbar. Besonders vorteilhaft ist, dass das erste Verkleidungsteil Teil der Motorradscheinwerferverkleidungseinheit ist, die wegen ihrer Kleinteiligkeit erhöhte Anforderungen an die Bauteile darstellt.

Auf dem Verbindungssteg ist wie beschrieben ein zweites Verkleidungsteil befestigt, wobei dabei Außenkanten des ersten Verkleidungsteils und des zweiten Verkleidungsteils aneinander anliegend gehalten sind. Das zweite Verkleidungsteil kann beispielsweise anders farbig lackiert sein.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht auf die Sichtseite einer Verkleidungseinheit;
- Fig. 2: eine perspektivische Ansicht auf die Sichtseite eines Verkleidungsteils.

Die Figuren sind beispielhaft schematisch und dienen dem besseren Verständnis der Erfindung.

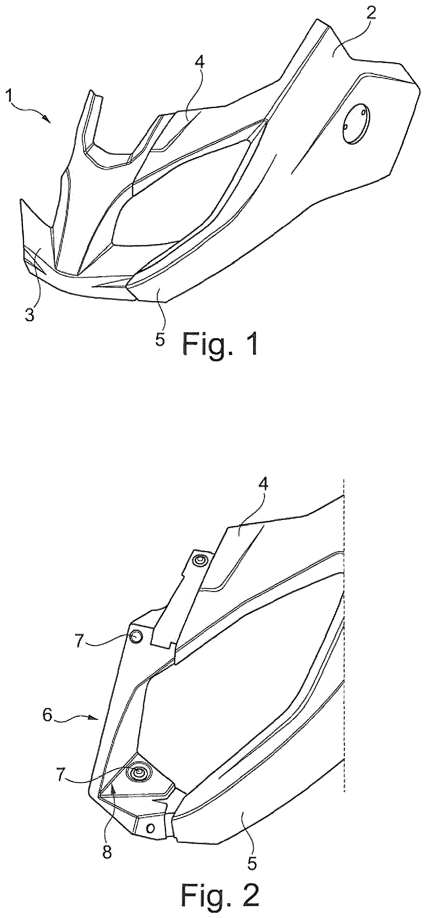

In Figur 1 ist eine Verkleidungseinheit 1 eines Scheinwerfers eines Motorrades gebildet aus einem in Figur 2 in Alleinstellung gezeigten ersten Verkleidungsteil 2 und einem daran ausgerichteten und befestigten zweiten Verkleidungsteil 3 in perspektivische Ansicht dargestellt. Die zur Vervollständigung der Verkleidungseinheit für den Scheinwerfer weiteren Bauteile sind aus Übersichtlichkeitsgründen weggelassen.

Bezugnehmend auf die Figuren 1 und 2 umfasst das erste Verkleidungsteil 2 zwei frei stehende Schenkel 4, 5, die jeweils freie und zu dem zweiten Verkleidungsteil 3 weisende Enden aufweisen. In der gezeigten Ausführung bilden die Schenkel 4, 5 zwischen sich eine Aussparung für ein nicht dargestelltes Scheinwerferglas. An den freien Enden der Schenkel 4, 5 ist an ihrer jeweiligen Rückseite und zur Sichtseite beabstandet ein Verbindungssteg 6 angeformt, der die Kontur und damit die Aussparung für das Scheinwerferglas schließt bzw. umschließt. Wie in Fig. 1 gezeigt, wird das zweite Verkleidungsteil 3 auf den Verbindungssteg 6 derart aufgelegt, dass die beiden Verkleidungsteile 2, 3 einen bündigen Übergang auf der Sichtseite der Motorradscheinwerferverkleidungseinheit 1 bilden. Hierbei erstreckt sich der Verbindungssteg 6 von der Rückseite des ersten Verkleidungsteils 2 nicht nur zu dem jeweils gegenüberliegenden freien Ende des anderen Schenkels, sondern auch weiter entlang der Schenkelrichtung und in Richtung des zweiten Verkleidungsteils 3. Die Erstreckung erfolgt parallel zur Ebene der Rückseite und zur Ebene der Sichtseite beabstandet.

Der Verbindungssteg 6 ist flacher und mit geringerer Dicke als das angrenzende erste Verkleidungsteil 2 ausgebildet, um eine flächige Auflage für das zweite Verkleidungsteil 3 zu bieten. An dem Verbindungssteg 6 ist eine Führungskante 8 ausgebildet, entlang der das zweite Verkleidungsteil 3 positionsfest an das erste Verkleidungsteil 2 zuordenbar ist. Zudem sind als Verschraubung 7 ausgebildete Befestigungsmittel an dem Verbindungssteg 6 vorgesehen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Die Erfindung umfasst auch Ausführungen mit mehr als zwei Schenkeln und mehreren Verbindungsstegen, welche die freien Enden der Schenkel verbinden und die Kontur schließen.

## Patentansprüche

1. Motorradscheinwerferverkleidungseinheit (1) mit einem ersten Verkleidungsteil (2) mit einer Sichtseite und einer Rückseite,
wobei an dem ersten Verkleidungsteil (2) mindestens zwei frei stehende Schenkel (4, 5) mit jeweils freien Enden ausgebildet sind,
und die Schenkel (4, 5) jeweils zwischen sich eine Aussparung für ein Scheinwerferglas bestimmen,
**dadurch gekennzeichnet, dass** die freien Enden der Schenkel (4, 5) auf ihrer Rückseite und zu einer Oberfläche der Sichtseite beabstandet mit mindestens einem Verbindungssteg (6) verbunden sind, der eine durch die Schenkel (4, 5) bestimmte Kontur schließt, so dass die zwischen den Schenkeln (4, 5) bestimmte Aussparung für das Scheinwerferglas durch die Schenkel (4, 5) und den Verbindungssteg (6) vollumfänglich geschlossen ist,
wobei auf dem Verbindungssteg (6) ein zweites Verkleidungsteil (3) befestigt ist und dabei Außenkanten des ersten Verkleidungsteils (2) und des zweiten Verkleidungsteils (3) aneinander anliegend gehalten sind,
wobei das zweite Verkleidungsteil (3) auf dem Verbindungssteg (6) derart aufliegt, dass die beiden Verkleidungsteile (2, 3) einen bündigen Übergang auf der Sichtseite der Verkleidungseinheit (1) bilden
und sich der Verbindungssteg (6) von der Rückseite des ersten Verkleidungsteils (2) nicht nur zu dem jeweils gegenüberliegenden freien Ende des anderen Schenkels, sondern auch weiter entlang der Schenkelrichtung und in Richtung des zweiten Verkleidungsteils (3) erstreckt
und wobei an dem Verbindungssteg (6) Befestigungsmittel zur Befestigung von Verkleidungs- oder Motorradteilen vorgesehen sind.

2. Motorradscheinwerferverkleidungseinheit (1) nach Anspruch 1, **dadurch gekennzeichnet, dass** der mindestens eine Verbindungssteg (6) einteilig an dem ersten Verkleidungsteil (2) angeformt ist.

3. Motorradscheinwerferverkleidungseinheit (1) nach Anspruch 1 oder 2, **dadurch gekennzeichnet, dass** sich der Verbindungssteg (6) parallel zur Rückseite des ersten Verkleidungsteil (2) und entlang einer zur Sichtseite beabstandeten Ebene des ersten Verkleidungsteils (2) erstreckt.

4. Motorradscheinwerferverkleidungseinheit (1) nach zumindest einem der vorigen Ansprüche, **dadurch gekennzeichnet, dass** der Verbindungssteg (6) gegenüber dem ersten Verkleidungsteil (2) dünnwandiger ausgebildet ist.

5. Motorradscheinwerferverkleidungseinheit (1) nach zumindest einem der vorigen Ansprüche, **dadurch gekennzeichnet, dass** an dem Verbindungssteg (6) mindestens eine Führungskante (8) ausgebildet ist, entlang der das zweite Verkleidungsteil (3) positionsfest an das erste Verkleidungsteil (2) anordenbar ist.

## Claims

1. Motorcycle headlight fairing unit (1) with a first fairing part (2) with a visible side and a rear side,
at least two self-supporting limbs (4, 5) with respective free ends being configured on the first fairing part (2),
and the limbs (4, 5) in each case defining a cut-out for a headlight lens between them,
**characterized in that**, on their rear side and spaced apart from a surface of the visible side, the free ends of the limbs (4, 5) are connected to at least one connecting web (6) which closes a contour which is defined by way of the limbs (4, 5), with the result that the cut-out, defined between the limbs (4, 5), for the headlight lens is closed over the full periphery by way of the limbs (4, 5) and the connecting web (6),
a second fairing part (3) being fastened on the connecting web (6), and outer edges of the first fairing part (2) and the second fairing part (3) being held here such that they bear against one another,
the second fairing part (3) lying on the connecting web (6) in such a way that the two fairing parts (2, 3) form a flush transition on the visible side of the fairing unit (1),
and the connecting web (6) extending from the rear side of the first fairing part (2) not only to the respective opposite free end of the other limb, but also further along the limb direction and in the direction of the second fairing part (3),
and fastening means for fastening fairing parts or motorcycle parts being provided on the connecting web (6) .

2. Motorcycle headlight fairing unit (1) according to Claim 1, **characterized in that** the at least one connecting web (6) is formed in one piece on the first fairing part (2).

3. Motorcycle headlight fairing unit (1) according to Claim 1 or 2, **characterized in that** the connecting web (6) extends parallel to the rear side of the first fairing part (2) and along a plane of the first fairing part (2), which plane is spaced apart from the visible side.

4. Motorcycle headlight fairing unit (1) according to at least one of the preceding claims, **characterized in that** the connecting web (6) is configured with thinner walls than the first fairing part (2).

5. Motorcycle headlight fairing unit (1) according to at least one of the preceding claims, **characterized in that** at least one guide edge (8) is configured on the connecting web (6), along which guide edge (8) the second fairing part (3) can be arranged in a positionally fixed manner on the first fairing part (2).

## Revendications

1. Unité de carénage de phare de motocyclette (1) comprenant une première partie de carénage (2) pourvue d'un côté visible et d'un côté arrière,
au moins deux branches indépendantes (4, 5) pourvues chacune d'extrémités libres étant formées au niveau de la première partie de carénage (2),
et les branches (4, 5) définissant entre elles un évidement destiné à un verre de phare,
**caractérisée en ce que** les extrémités libres des branches (4, 5) sont reliées, sur leur côté arrière et à distance d'une surface du côté visible, à au moins une nervure de liaison (6) qui ferme un contour défini par les branches (4, 5) de sorte que l'évidement destiné au verre de phare et défini entre les branches (4, 5) est complètement fermé par les branches (4, 5) et la nervure de liaison (6),
une deuxième partie de carénage (3) étant fixée à la nervure de liaison (6) et des bords extérieurs de la première partie de carénage (2) et de la deuxième partie de carénage (3) étant maintenus en appui l'un sur l'autre,
la deuxième partie de carénage (3) venant en appui sur la nervure de liaison (6) de telle sorte que les deux parties de carénage (2, 3) forment une transition à fleur sur le côté visible de l'unité de carénage (1) et la nervure de liaison (6) s'étendant depuis l'arrière de la première partie de carénage (2) non seulement en direction de l'extrémité libre opposée de l'autre branche mais également davantage dans la direction de la branche et en direction de la deuxième partie de carénage (3)
et des moyens de fixation destinés à fixer des parties de carénage ou de motocyclette étant prévus sur la nervure de liaison (6).

2. Unité de carénage de phare de motocyclette (1) selon la revendication 1, **caractérisée en ce que** l'au moins une nervure de liaison (6) est formée d'une seule pièce sur la première partie de carénage (2).

3. Unité de carénage de phare de motocyclette (1) selon la revendication 1 ou 2, **caractérisée en ce que** la nervure de liaison (6) s'étend parallèlement au côté arrière de la première partie de carénage (2) et le long d'un plan de la première partie de carénage (2) qui est distant du côté visible.

4. Unité de carénage de phare de motocyclette (1) selon l'une au moins des revendications précédentes, **caractérisée en ce que** la nervure de liaison (6) est conçue pour avoir une paroi plus mince que celle de la première partie de carénage (2).

5. Unité de carénage de phare de motocyclette (1) selon l'une au moins des revendications précédentes, **caractérisée en ce qu'**au moins un bord de guidage (8) est formé sur la nervure de liaison (6), le long duquel la deuxième partie de carénage (3) peut être disposée dans une position fixe sur la première partie de carénage (2).
